# EUROPÄISCHE PATENTANMELDUNG

(11) **EP 2 479 112 A1**
(43) Veröffentlichungstag der Anmeldung: **25.07.2012**
(21) Anmeldenummer: 12000214.2
(22) Anmeldetag: 16.01.2012
(51) Int. Cl.: B65B 37/02, B65B 69/00, B23H 1/10, B23H 3/10, B65D 47/16

(54) **Verfahren und Vorrichtung zum Entleeren von Behältern**

(30) Priorität: 21.01.2011 DE 102011009080
(71) Anmelder: NETZSCH Mohnopumpen GmbH, 95100 Selb (DE)
(72) Erfinder: Dunker, Ingo, 84149 Velden/Vils (DE); Meier, Matthias, 84333 Malgersdorf (DE); Harthauß, Christian, 84427 sankt wolfgang (DE); Untergehrer, Stephan, 84149 Velden (DE)

(57) **Zusammenfassung**

Es ist ein Verfahren zum kontinuierlichen Bereitstellen von Material an eine nachgeschaltete Weiterverarbeitungsanlage offenbart. Es werden mindestens zwei zu entleerende Behälter bereitgestellt. Diese Behälter werden in einer Entleerungsstation angeordnet. In der Entleerungsstation werden die Behälter mit einem gemeinsamen Verteiler- und Entlüftungssystem verbunden. Mit der Entleerungsstation wird immer nur ein Behälter entleert, während mindestens ein weiterer Behälter für die Entleerung vorbereitet wird.

## Beschreibung

Die vorliegende Erfindung betrifft ein Verfahren und eine Vorrichtung zum Entleeren von Behältern.

Die deutsche Patentanmeldung DE 10 2009 009 710 A1 offenbart ein Verfahren zur Bereitstellung eines Elektrolyts zur elektrochemischen Bearbeitung eines Werkstücks, bei dem zumindest folgende Schritte durchgeführt werden: Bereitstellen eines Elektrolyts, zumindest im ersten Vorratsbehälter von mehreren Vorratsbehältern. Komprimieren des Elektrolyts im ersten Vorratsbehälter. Koppeln des ersten Vorratsbehälters mit zumindest einer Bearbeitungsstation und Zuleiten des Elektrolyts aus dem ersten Vorratsbehälter zu dieser Bearbeitungsstation. Umschalten vom ersten Vorratsbehälter auf einen gefüllten zweiten Vorratsbehälter, wenn der Elektrolyt im ersten Vorratsbehälter einen Mindeststand erreicht hat. Entkoppeln des ersten Vorratsbehälters von der Bearbeitungsstation. Zudem wird eine Vorrichtung mit zumindest einer Bearbeitungsstation und einem entsprechenden Elektrolytbereitstellungssystem beschrieben.

Die europäische Patentschrift EP 1 950 139 B1 offenbart eine Vorrichtung zur Entleerung eines flexiblen Behälters für einen flexiblen Schüttgutbehälter. Die Vorrichtung umfasst eine Basisstruktur, wobei die Vorrichtung dadurch gekennzeichnet ist, dass sie ein gemeinsames bewegliches Behälterstützelement, zum Stützen des flexiblen Schüttgutbehälters, besitzt und mit einem, für eine vertikale Bewegung der Basisstruktur im Verhältnis zu derselben schwenkbar verbunden ist. Die Vorrichtung umfasst mehrere, in gleichem Winkel schwenkbare Druckelemente, die unmittelbar oder mittelbar mit dem gemeinsamen Stützelement verbunden sind und die in einer Richtung, weg von dem gemeinsamen Stützelement, vorspringen, um eine Hülle für den flexiblen Schüttgutbehälter auf dem Stützelement zu definieren. Bei der Anwendung der Vorrichtung drückt das Gewicht des Behälters das gemeinsame Stützelement nach unten, was folglich bewirkt, dass die Druckelemente in gleichem Winkel nach innen schwenken und diese sich auf den flexiblen Schüttgutbehälter pressen.

Aus dem Stand der Technik sind viele Vorrichtungen und Verfahren bekannt, mit denen verschiedenen Behälter wie IBCs, Fässer und andere Gebinde entleert werden können.

Somit liegt dieser Erfindung die Aufgabe zugrunde, ein Verfahren bereit zu stellen, mit dem verschiedene Behälter blasenfrei entleert werden können und mit welchem die Versorgung einer nachgeschalteten Weiterverarbeitungseinheit sichergestellt wird.

Die obige Aufgabe wird durch ein Verfahren gelöst, das die Merkmale des Anspruchs 1 umfasst. Weitere vorteilhafte Ausgestaltungen sind den Merkmalen der Unteransprüche zu entnehmen.

Eine weitere Aufgabe der Erfindung ist es eine Entleerungsstation zu schaffen, mit welcher Behälter blasenfrei entleerbar sind und mit welcher die Versorgung einer nachgeschalteten Weiterverarbeitungseinheit sichergestellt ist.

Diese Aufgabe wird durch eine Entleerungsstation gelöst, welche die Merkmale des Anspruches 6 umfasst. Weitere vorteilhafte Ausgestaltungen sind den Merkmalen der Unteransprüche zu entnehmen.

Es ist ein Verfahren zum kontinuierlichen Bereitstellen von Material an eine nachgeschaltete Weiterverarbeitungsanlage offenbart. Es werden mindestens zwei zu entleerende Behälter bereitgestellt. Diese Behälter werden in einer Entleerungsstation angeordnet. In der Entleerungsstation werden die Behälter mit einem gemeinsamen Verteiler- und Entlüftungssystem verbunden. Mit der Entleerungsstation wird immer nur ein Behälter entleert, während mindestens ein weiterer Behälter für die Entleerung vorbereitet wird. Das beim Entlüften geförderte Material wird in einen der Behälter zurückgeführt. Die eigentliche Entleerung der Behälter erfolgt dadurch, dass das Material aufgrund der Schwerkraft unten am Behälterauslauf zusammenfließt. Für den Weitertransport des Materials aus den Behältern wird nur eine Pumpe verwendet.

Aufgrund der unterschiedlichen Viskositäten, die verschiedene Materialien aufweisen können, kann es notwendig sein, die Entleerungsstation mit verschiedenen Pumpen zu versehen, welche das zu verarbeitende Material störungsfrei fördern können. Durch Sensoren wird ermittelt, ob ein erster Behälterplatz und/oder ein zweiter Behälterplatz der Entleerungsstation mit mindestens einem Behälter versehen ist. Es ist auch möglich, anstelle eines IBCs mehrere Fässer oder andere Gebinde in die Behälterstellplätze einzustellen.

Die Behälter werden mit jeweils einem Füllstandssensor versehen. Weiterhin können die Behälter nebeneinander und/oder übereinander in der Entleerungsstation angeordnet werden. Ein wichtiges Kriterium ist bei allen Anordnungen, dass die Behälter sich immer oberhalb der Pumpe befinden müssen, damit bei der Entleerung der Behälter die Pumpe immer mit Material versorgt wird.

Der Prozess des Entleerens der Behälter kann elektrisch, pneumatisch oder elektropneumatisch gesteuert werden. Die Steuerung wird hierbei von einer Software und einem Computer vorgenommen.

Weiterhin offenbart die Erfindung eine Entleerungsstation zur Durchführung des Verfahrens zum kontinuierlichen Bereitstellen von Material an eine nachgeschaltete Weiterverarbeitungsanlage. Weiterverarbeitungsanlagen können zum Beispiel Anlagen zur Dosierung von Material, Auftragseinheiten für Klebstoffe oder Abfüllanlagen sein.

In der erfindungsgemäßen Entleerungsstation sind mindestens zwei Behälter angeordnet, wobei die Behälter in einem Teil der Entleerungsstation angeordnet sind, der in einer bevorzugten Ausführungsform von einem Schwerlastregal gebildet ist. Es ist weiterhin möglich, das Grundgestell der Entleerungsstation aus einer festen Stahlkonstruktion herzustellen.

Die in der Entleerungsstation angeordnete Pumpe ist vorzugsweise eine Exzenterschneckenpumpe. Für den Fachmann ist jedoch klar, dass es viele verschiedenen Arten von Pumpen gibt und dass durch dieses Beispiel keine abschließende Beschränkung der Erfindung erfolgt.

Weiterhin ist die Entleerungsstation mit einem Verteiler- und Entlüftungssystem für die Behälter versehen. Diese Verteiler- und Entlüftungssystem ist mit mehreren Entlüftungen ausgestattet. Durch das Verteiler- und Entlüftungssystem System ist es möglich Luft und/oder Gase aus dem Material, welches aus den Behältern kommt, abzusaugen und zu entfernen. Die Entlüfter können an eine Gassammeistation angeschlossen sein. Über diese Gassammelstation ist es dann möglich, zum Beispiel explosionsgefährliche Gase gezielt abzuleiten und/oder einer gezielten Entsorgung zuzuführen.

Die Entleerungsstation ist mit Sensoren versehen, die die Abmessungen der Behälter ermitteln. Weiterhin ist jeder Behälter mit einem Füllstandssensor ausgestattet. In einer bevorzugten Ausführungsform ist der Füllstandssensor in einem Deckel angeordnet, welche auf den Behälter aufgebracht ist. Aus dem Stand der Technik sind viele Möglichkeiten bekannt um die Füllstände in einem Behälter zu ermitteln. Eine weitere Methode zu dem Füllstandssensor im Deckel des Behälters wäre das Anbringen einer Waage unterhalb der Behälter.
Fig. 1 zeigt die erfindungsgemäße Entleerungsstation mit Steuerschrank.
Fig. 2 zeigt das Verteiler-und Entlüftungssystem.

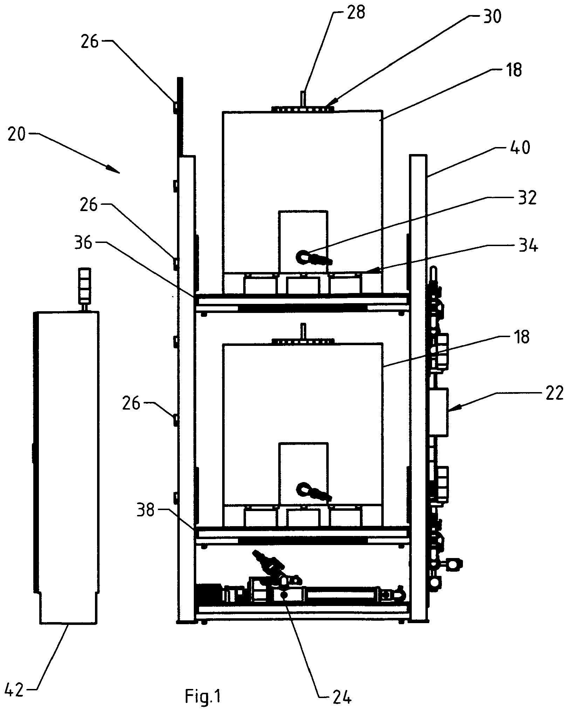

Fig. 1 zeigt die erfindungsgemäße Entleerungsstation 20 mit Steuerschrank 42. Die Grundstruktur der in diesem Ausführungsbeispiel beschriebenen Entleerungsstation 20 wird von einem Schwerlastregal 40 gebildet. In dem Schwerlastregal 40 sind zwei Behälter 18 angeordnet. Beide Behälter 18 befinden sich oberhalb der Pumpe 24.

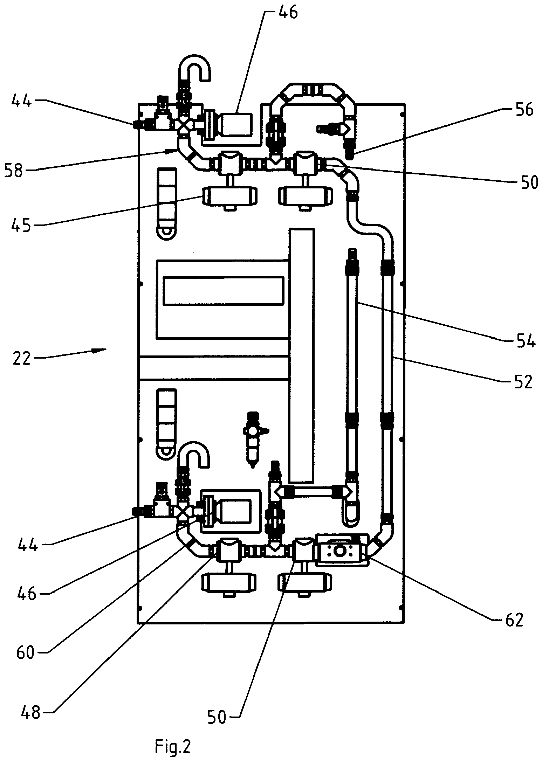

Diese Art der Behälteranordnung ist wichtig, da die Behälter 18 durch Schwerkraft entleert werden. Entleert werden die Behälter 18 dabei jeweils über den Behälterauslauf 32, welcher sich nahe der jeweiligen Behälterbasis 34 befindet. Das Material, das aus den Behältern 18 läuft, wird mittels der Pumpe 24 direkt in das Verteiler- und Entlüftungssystem 22 eingeleitet. Die genaue Funktion des Verteiler-und Entlüftungssystems 22 wird in der Fig. 2 beschrieben. Um zu ermitteln, ob der erste Behälterplatz 36 und/oder der zweite Behälterplatz 38 in der Entleerungsstation 20 mit einem Behälter 18 bestückt ist, ist die Entleerungsstation 20 mit Sensoren 26 versehen. Mit diesen Sensoren 26 ist es möglich zu bestimmen, ob ein Behälterplatz 36 oder 38 besetzt ist und welche Abmessungen der jeweilig Behälter 18 aufweist. Um die Be- und/oder Entlüftung der zu entleerenden Behälter 18 sicherzustellen, werden die Behälter 18 mit einem speziellen Deckel 30 versehen. Zusätzlich zur Be-und/oder Entlüftung ist an dem Deckel 30 ein Füllstandssensor 28 angebracht. Als Füllstandssensor 28 können aus dem Stand der Technik bekannte Sensoren verwendet werden, welche entweder mit Ultraschall und/oder kavitativ arbeiten. Ebenso ist es möglich, die Füllmenge eines jeden Behälters 18 über eine Waage (nicht dargestellt) zu bestimmen, welche zwischen der Behälterbasis 34 und dem Schwerlastregal 40 angeordnet ist. Die Informationen, die die Sensoren 26 und die Füllstandssensoren 28 liefern, werden im Schaltschrank 42 verarbeitet und zur Steuerung der Entleerung an das Verteiler- und Entlüftungssystem 22 weitergegeben.

Fig. 2 zeigt das Verteiler-und Entlüftungssystem 22. Das Material aus dem Behälter (nicht dargestellt), der gerade entleert wird, wird dem Verteiler- und Entlüftungssystem 22, mittels einer Pumpe (nicht dargestellt), über den jeweiligen Zulauf 44, zugeführt. Von dort gelangt das Material aus dem Behälter über eine Rohrleitung, welcher einer Entlüftung 46 zugeordnet ist, zu einem ersten Ventil 48. Wird dieses erste Ventil 48 geöffnet, kann das Material über den Auslass 56 an eine Weiterverarbeitungsmaschine (nicht dargestellt) abgegeben werden. Die erste Einheit 58 und die zweite Einheit 60 des Verteiler- und Entlüftungssystems 22 sind identisch ausgeführt. Durch diese identische Ausführung der Einheiten 58 und 60 ist es möglich, mehrere, in diesem Ausführungsbeispiel zwei Behälter, gleichzeitig zu händeln. Um das Material des Behälters, der die zweite Einheit 60 speist, an den Auslass 56 zu leiten, wird das Ventil 48 der ersten Einheit 58 geschlossen. Die Ventile 50 der ersten Einheit 58 und der zweiten Einheit 60 werden geöffnet, und das Material kann über die Verbindungsleitung 52 zum Auslass 56 fließen. Sollte es einmal Probleme mit der Verbindungsleitung 52 geben, kann das Material nach dem Schließen des Sicherheitsventiles 62 über den Bypass 54 zum Auslass 56 gefördert werden.

Die Erfindung wurde unter Bezugnahme auf eine bevorzugte Ausführungsform beschrieben.

### Bezugszeichen

- 18: Behälter
- 20: Entleerungsstation
- 22: Verteiler- und Entlüftungssystem
- 24: Pumpe
- 26: Sensoren
- 28: Füllstandssensoren
- 30: Deckel
- 32: Behälterauslauf
- 34: Behälterbasis
- 36: erster Behälterplatz
- 38: zweiter Behälterplatz
- 40: Schwerlastregal
- 42: Steuerschrank
- 44: Zulauf
- 46: Entlüftung
- 48: erstes Ventil
- 50: zweites Ventil
- 52: Verbindungsleitung
- 54: Bypass
- 56: Auslass
- 58: erste Einheit
- 60: zweite Einheit
- 62: Sicherheitsventil

## Patentansprüche

1. Verfahren zum kontinuierlichen Bereitstellen von Material an eine nachgeschaltete Weiterverarbeitungsanlage, **dadurch gekennzeichnet, dass**
a. mindestens zwei zu entleerende Behälter (18) bereitgestellt werden;
b. die mindestens zwei Behälter (18) in einer Entleerungsstation (20) angeordnet werden;
c. die mindestens zwei Behälter (18) mit einem gemeinsamen Verteiler-und Entlüftungssystem (22) verbunden werden;
d. immer nur ein Behälter (18) entleert wird, während mindestens ein weiterer Behälter (18) für die Entleerung vorbereitet wird;
e. das beim Entlüften geförderte Material in einen der mindestens zwei Behälter (18) zurückgefördert wird;
f. die mindestens zwei Behälter (18) durch die Schwerkraft des Materials entleert werden und
g. für den Weitertransport des Materials aus den mindestens zwei Behältern (18) nur eine Pumpe (24) verwendet wird.

2. Verfahren nach Anspruch 1, **dadurch gekennzeichnet, dass** durch Sensoren (26) ermittelt wird, ob ein erster Behälterplatz (36) und/oder ein zweiter Behälterplatz (38) der Entleerungsstation (20) mit mindestens einem Behälter (18) versehen ist.

3. Verfahren nach einem der Ansprüche 1 oder 2, **dadurch gekennzeichnet, dass** die mindestens zwei Behälter (18) mit jeweils einem Füllstandssensoren (28) versehen werden.

4. Verfahren nach einem der Ansprüche 1 bis 3, **dadurch gekennzeichnet, dass** die mindestens zwei Behälter (18) nebeneinander und/oder übereinander, aber immer oberhalb der Pumpe (24) angeordnet werden.

5. Verfahren nach einem der Ansprüche 1 bis 4, **dadurch gekennzeichnet, dass** der Prozess des Entleerens der Behälter (18) elektrisch oder pneumatisch oder elektropneumatisch gesteuert wird, wobei die Steuerung von einer Software und einem Computer durchgeführt wird.

6. Entleerungsstation (20) zur Durchführung des Verfahrens nach einem der Ansprüche 1 bis 5, **dadurch gekennzeichnet, dass** in der Entleerungsstation (20) mindestens zwei Behälter (18) angeordnet sind.

7. Entleerungsstation (20) nach Anspruch 6, **dadurch gekennzeichnet, dass** ein Teil der Entleerungsstation (20) ein Schwerlastregal (40) ist.

8. Entleerungsstation (20) nach einem der Ansprüche 6 oder 7, **dadurch gekennzeichnet, dass** in der Entleerungsstation (20) eine Pumpe (24), vorzugsweise eine Exzenterschneckenpumpe, angeordnet ist.

9. Entleerungsstation (20) nach einem der Ansprüche 6 bis 8, **dadurch gekennzeichnet, dass** die Entleerungsstation (20) mit einem Verteiler- und Entlüftungssystem (22) für die Behälter (18) versehen ist.

10. Entleerungsstation (20) nach einem der Ansprüche 6 bis 9, **dadurch gekennzeichnet, dass** das Verteiler- und Entlüftungssystem (22) mit mehreren Entlüftungen (46) versehen ist.

11. Entleerungsstation (20) nach einem der Ansprüche 6 bis 10, **dadurch gekennzeichnet, dass** die Entleerungsstation (22) mit Sensoren (26) versehen ist, die die Abmessungen der Behälter (18) ermitteln.

12. Entleerungsstation (20) nach einem der Ansprüche 6 bis 11, **dadurch gekennzeichnet, dass** jeder der mindestens zwei Behälter (18) mit einem Füllstandssensor (28) ausgestattet ist.

13. Entleerungsstation (20) nach Anspruch 12, **dadurch gekennzeichnet, dass** der Füllstandssensor (28) in einem Deckel (30) angeordnet ist.
